# EUROPÄISCHE PATENTSCHRIFT

(11) **EP 0 482 308 B1**
(45) Veröffentlichungstag und Bekanntmachung des Hinweises auf die Patenterteilung: **27.07.1994**
(21) Anmeldenummer: 91113553.1
(22) Anmeldetag: 13.08.1991
(51) Int. Cl.: G02B 6/06

(54) **Flexibles, optisches Bauteil**
Flexible optical component
Composant flexible optique

(30) Priorität: 26.10.1990 DE 4034058
(43) Veröffentlichungstag der Anmeldung: 29.04.1992
(73) Patentinhaber: Heraeus Quarzglas GmbH, D-63405 Hanau (DE)
(72) Erfinder: Klein, Karl-Friedrich, Dr., W-6360 Friedberg 2 (DE); Fabian, Heinz, W-6450 Hanau 7 (DE)
(74) Vertreter: Kühn, Hans-Christian

(56) Entgegenhaltungen:
- FR-A- 2 564 983
- US-A- 3 853 658

## Beschreibung

Die Erfindung betrifft ein flexibles, optisches, eine Vielzahl länglicher, lichtleitender Einzelelemente enthaltendes Bauteil für die Übertragung von Licht, wobei jedes Einzelelement einen Kern und einen diesen umhüllenden, eine kleinere Brechzahl als der Kern aufweisenden Mantel umfaßt und in Einstrahlrichtung des zu übertragenen Lichtes gesehen vor einem zylindrischen Bereich einen Verjüngungsbereich aufweist, dessen Querschnittsfläche sich in Einstrahlrichtung stetig verkleinert und der auf seiner, einer das zu übertragende Licht emittierenden Lichtquelle zugekehrten Stirnseite eine Einkoppelfläche aufweist, wobei eine erste Einkoppelebene von den Einkoppelflächen von Einzelelementen so belegt ist, daß zwischen benachbarten Einkoppelflächen Freiflächen vorhanden sind.

Derartige optische Bauteile werden zur optischen Bildübertragung, insbesondere für Anwendungen im Bereich der Mikroskopie und zur Übertragung von energiereichem Licht eingesetzt. Dabei liegt die besondere Eignung des Bauteils für die letztgenannte Verwendung darin, daß durch die Verteilung der zu übertragenen optischen Leistung auf mehrere Einzelelemente, die Leistungsdichte, denen ein einzelnes Einzelelement bei gleicher Leistungsübertragung ausgesetzt wäre, unter weitgehender Erhaltung der Flexibilität des Einzelelementes für das gesamte Bauteil, verringert wird.

In der US-Patentschrift 3,837,727 wird ein derartiges Bauteil beschrieben, das für die optische Bildübertragung verwendbar ist und das aus einem Bündel von gleichlangen, parallel zueinander verlaufenden, Kern- und Mantelglas umfassenden Lichtwellenleitern besteht. Die Lichtwellenleiter, von denen jeder einen langgestreckten, zylindrischen Bereich mit einem sich konisch erweiternden Ende aufweist, sind um ihre Längsachse rotationssymmetrisch ausgebildet und unter weitgehender Beibehaltung ihrer geometrischen Anordnung zueinander im Bereich ihrer Stirnseiten miteinander verschmolzen. Dabei enden die Stirnflächen aller Lichtwellenleiter beidseitig in gemeinsamen Bündel-Stirnflächen, die je nach Einstrahlrichtung als Einstrahlfläche bzw. als Abstrahlfläche für das zu übertragene Licht dienen. Aufgrund ihrer rotationssymmetrischen Ausbildung belegen die Lichtwellenleiter-Stirnflächen jedoch nur eine Teilfläche von jeder Bündel-Stirnfläche. Insbesondere beträgt der Flächenbelegungsgrad von kreisförmigem, gleich großen Lichtwellenleiter-Stirnflächen an einer Bündel-Stirnfläche bei dichtest möglicher Packung der Lichtwellenleiter maximal 78,5%. Dadurch ist der Einkoppelwirkungsgrad, der sich aus dem Verhältnis der Lichtintensitäten von unmittelbar vor der Einstrahlfläche des Bündels zur Summe der Lichtintensitäten unmittelbar hinter den Stirnflächen der Lichtwellenleiter ergibt, begrenzt.

Neben diesem optischen Bauteil sind in der US-Patentschrift 3,837,727 noch weitere Ausführungsformen von Bauteilen zur Übertragung von Licht aufgeführt, bei denen die Lichtwellenleiter, mit der Zielsetzung eines hohen Einkoppelwirkungsgrades, in einer Form, beispielsweise mit qradratischem Querschnitt, ausgebildet sind, die ein hohlraumfreies Bündeln der Lichtwellenleiter ermöglicht. Da die Modenverteilung eines Lichtstrahles jedoch im wesentlichen rotationssymmetrisch ist, erleiden die in den Ecken der jeweiligen quadratischen Lichtwellenleiter-Stirnflächen eingekoppelten Lichtmoden während der Übertragung des Lichtes durch den Lichtwellenleiter eine starke Dämpfung. Damit wird der Vorteil eines erhöhten Einkoppelwirkungsgrades bei dieser Ausführungsform durch die ungünstigen Anregungsbedingungen für das zu übertragene Licht und die daraus resultierenden hohen Verluste durch die Lichtdämpfung wieder eingeschränkt. Zudem sind die Lichtwellenleiter, die keine rotationssymmetrische Form haben, insbesondere dann, wenn die Lichtwellenleiter-Querschnittsfläche über die Länge des Lichtwellenleiters variiert, nur mit umständlichen oder komplizierten und dadurch teuren Verfahren herstellbar.

Die beiden beschriebenen Ausführungsformen haben gemeinsam, daß, unabhängig von der Lichtwellenleiter-Form, Teilflächen der Einstrahlfläche des Bündels mit Mantelglas belegt sind. Das in das Mantelglas eingekoppelte Licht wird jedoch aufgrund des im Lichtwellenleiter vorhandenen Brechzahlprofils nicht geführt und trägt zur Lichtübertragung nicht bei. Die mit Mantelglas belegten Teilflächen vermindern damit den Einkoppelwirkungsgrad für das zu übertragene Licht. Im Fall der Einkopplung von hohen Lichtleistungen in das Mantelglas besteht außerdem die Gefahr der Zerstörung des Mantels oder einer den Mantel umhüllenden Schicht durch energiereiche Strahlung.

Der vorliegenden Erfindung liegt die Aufgabe zugrunde, ein flexibles, optisches Bauteil anzugeben, das für die Übertragung hoher Lichtleistungen geeignet ist, das einen hohen Einkoppelwirkungsgrad sowie eine niedrige Lichtdämpfung aufweist und das einfach und preiswert herstellbar ist.

Die Aufgabe wird für Einzelelemente mit kreisförmigen oder im wesentlichen runden Querschnittsflächen erfindungsgemäß dadurch gelöst, daß in Einstrahlrichtung gesehen mindestens eine weitere, parallel zur ersten Einkoppelebene verlaufende und dieser mit Abstand nachgeordnete Einkoppelebene vorgesehen ist, in der Einkoppelflächen von weiteren Einzelelementen so angeordnet sind, daß sie hinter den Freiflächen liegen. Dadurch, daß hinter den Freiflächen Einkoppelflächen angeordnet sind, ist es möglich, daß der Anteil des zu übertragenen Lichtes, der beim Ausleuchten der Bauteil-Stirnfläche auf die Freiflächen trifft in der nachfolgenden Einkoppelebene oder in einer der folgenden Einkoppelebenen in eine der dort angeordneten Einkoppelflächen eingekoppelt wird. Unter Einkoppelfläche wird dabei die zur Einkopplung des zu übertragenen Lichtes nutzbare Fläche, nämlich der mit Kern-Material belegte Flächenanteil an der der Lichtquelle zugekehrten Stirnseite des Einzelelementes verstanden. Auch dann, wenn sich in der ersten Einkoppelebene die Verjüngungsbereiche benachbarter Einzelelemente mit ihren größten Durchmessern tangieren, ermöglicht die Ausbildung der Einzelelemente mit einem Verjüngungsbereich, dessen Querschnittsfläche sich in Einstrahlrichtung des zu übertragenen Lichtes gesehen stetig bis auf die Querschnittsfläche des zylindrischen Bereiches verkleinert, im Bereich hinter den in der ersten Einkoppelebene verlaufenden Einkoppelflächen die Anordnung weiterer Einzelelemente. Die Größe der Einkoppelflächen der nachgeordneten Einzelelemente ist dabei der Größe der Freiflächen angepaßt. Durch diese in Einstrahlrichtung gestaffelte Anordnung von Einkoppelflächen wird der Einkoppelwirkungsgrad für das zu übertragende Licht beträchtlich erhöht. Die Ausbildung der Einzelelemente mit einem zylindrischen Bereich und einem Verjüngungsbereich mit einer kreisförmigen oder im wesentlichen runden Querschnittsfläche ermöglicht dabei eine einfache und preisgünstige Herstellungsweise der Einzelelemente mit den bekannten Verfahren, beispielsweise durch Ziehen aus einer erhitzten, niedrigviskosen Vorform und gewährleistet optimale Anregungsbedingungen und geringe Dämpfungsverluste für das zu übertragene Licht.

Eine Ausbildung des optischen Bauteils derart, daß entgegen der Einstrahlrichtung die Projektion der Einkoppelflächen, die in der mindestens einen weiteren Einkoppelebene liegen, auf die erste Einkoppelebene, die Freiflächen vollkommen umfaßt, hat sich besonders bewährt. Da dabei allen Freiflächen Einkoppelflächen zugeordnet sind, die in der mindestens einen nachgeordneten Einkoppelebene verlaufen, fällt das gesamte beim Ausleuchten der Bauteil-Stirnfläche eingestrahlte Licht, das in der ersten Einkoppelebene nicht auf eine Einkoppelfläche trifft, in einer der nachgeordneten Einkoppelebenen auf eine dort verlaufende Einkoppelfläche und geht damit für die Lichtübertragung nicht verloren.

Besonders einfach und effektiv gestaltet sich eine Ausbildung des Bauteils, bei der entgegen der Einstrahlrichtung die Projektion der Einkoppelflächen, die in der zweiten Einkoppelebene liegen, auf die erste Einkoppelebene, die Freiflächen vollkommen umfaßt. Eine Anordnung der Einzelelemente in zwei Einkoppelebenen ist besonders vorteilhaft, wenn die Verjüngungsbereiche benachbarter, in der ersten Einkoppelebene endender Einzelelemente sich berühren und jedem Einzelelement, das nicht am Rand des optischen Bauteils angeordnet ist, vier Einzelelemente gleichwertig benachbart zugeordnet sind und die Mittelpunkte der Einkoppelflächen auf den Achsen eines orthogonalen Koordinatensystems liegen.

Insbesondere hinsichtlich eines verbesserten Einkoppelwirkungsgrades und der Vermeidung von Materialzerstörungen durch Einkoppeln von energiereichem Licht in den Mantel, hat es sich als günstig erwiesen, von den Einzelelementen das Mantel-Material im Bereich der Einkoppelfläche zu entfernen. Dabei kann das Mantel-Material beispielsweise durch selektives Ätzen oder Abschleifen entfernt werden. Vorteilhafterweise wird dieser zusätzliche Fertigungsschritt für das optische Bauteil nur bei den Einzelelementen, deren Einkoppelflächen in der ersten Einkoppelebene verlaufen ausgeführt, wenn das Entfernen des Mantel-Materials bei den nachgeordneten Einzelelementen keine wesentliche Erhöhung des Einkoppelwirkungsgrades bewirken würde. Dies ist beispielsweise dann der Fall, wenn die Projektion der Freiflächen in Einstrahlrichtung auf die in der mindestens einen folgenden Einkoppelebene verlaufenden Stirnflächen von Einzelelemente keine mit Mantel-Material belegten Flächen schneidet. Herstellungskosten für das Bauteil können damit vermindert werden.

Es hat sich als günstig erwiesen, wenn das Mantel-Material in Einstrahlrichtung gesehen von der Einkoppelfläche an in einen Bereich von 1 mm bis 10 mm entfernt ist. Dadurch wird bei ausreichender Lichtführung des in den Kern eingekoppelten Lichtes ein Einstrahlen von Licht in den Mantel verhindert.

Besonders vorteilhaft ist die Anordnung der Einzelelemente in einer mit durchgehenden Öffnungen versehenen Lochplatte. Dies gewährleistet eine definierte Anordnung der Einzelelemente zueinander und ermöglicht eine automatisierte Herstellungsweise des Bauteils. Dabei hat sich eine Ausbildung der Lochplatte bewährt, bei der ein Teil der Öffnungen jeweils koaxial mit einem hohlzylindrischen Vorsatz versehen ist, wobei diesen Öffnungen jeweils ein Einzelelement zugeordnet ist, dessen Einkoppelfläche in der ersten Einkoppelebene verläuft. Eine derartige Ausbildung der Lochplatte ermöglicht sowohl eine definierte Staffelung der Einkoppelflächen von Einzelelementen sowohl in Einstrahlrichtung als auch senkrecht dazu. Dabei hat sich eine Lochplatte bewährt, die aus Quarzglas besteht und an der Quarzglasröhrchen angebracht sind. Die Betriebssicherheit des optischen Bauteils wird damit auch bei hohen Energie- oder Leistungsdichten des zu übertragenen Lichtes, sowie in Umgebungen, die das Bauteil und die Lochplatte chemisch oder thermisch belasten, gewährleistet.

Ausführungsbeispiele der Erfindung sind in der Zeichnung dargestellt und werden nachstehend näher erläutert. In der Zeichnung zeigt
- Fig. 1: in schematischer Darstellung den Verjüngungsbereich und einen Teil des zylindrischen Bereichs eines Einzelelementes,
- Fig. 2: in schematischer Darstellung eine Anordnung von Einzelelementen in einem erfindungsgemäßen optischen Bauteil,
- Fig. 3: in schematischer Darstellung eine Draufsicht auf die Stirnfläche eines erfindungsgemäßen optischen Bauteils in Richtung des eingestrahlten Lichtes und
- Fig. 4: in schematischer Darstellung eine Lochplatte zur Halterung der Einzelelemente des erfindungsgemäßen optischen Bauteils.

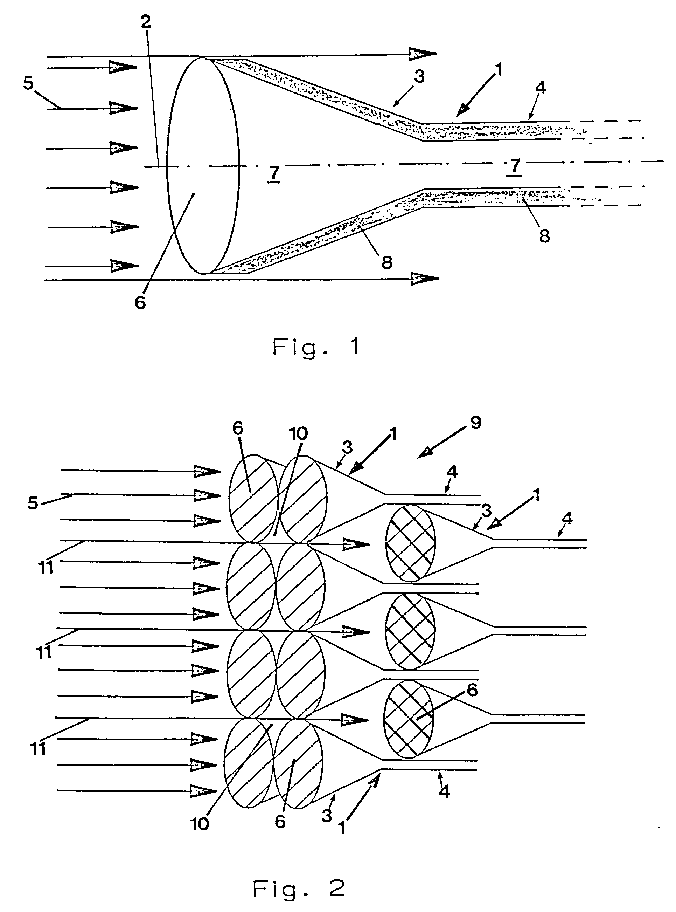

Das in Figur 1 dargestellte Einzelelement 1 ist um seine Längsachse 2 rotationssymmetrisch ausgebildet. Es umfaßt einen Verjüngungsbereich 3 und einen zylindrischen Bereich 4, der dem Verjüngungsbereich 3, in Einstrahlrichtung des zu übertragenen Lichtes gesehen, nachgeordnet ist. Die Einstrahlrichtung ist mit der Bezugsziffer 5 gekennzeichnet. Der Verjüngungsbereich 3 hat eine Länge von 35 mm. Der Durchmesser seiner in Einstrahlrichtung 5 betrachteten Querschnittsfläche nimmt auf dieser Länge kontinuierlich bis auf den Durchmesser des zylindrischen Bereichs 4 ab. Die gesamte, einer in der Figur nicht dargestellten, das zu übertragene Licht emittierenden Lichtquelle, zugekehrte Stirnseite des Verjüngungsbereiches 3 ist als Einkoppelfläche 6, mit einem Durchmesser von 6 mm ausgebildet. Zur Fokussierung des eingekoppelten Lichtstrahles unmittelbar vor den Anfang des zylindrischen Bereiches 4, ist die Einkoppelfläche 6 gekrümmt und mit einem Krümmungsradius von 12 mm, versehen. Das Einzelelement 1 weist einen Kern 7 aus hochreinem, synthetischem Quarzglas und einen den Kern 7 umhüllenden, aus fluordotiertem Quarzglas bestehenden Mantel 8 auf. Der zylindrische Bereich 4 hat einen Gesamtdurchmesser von 0,8 mm, wovon 0,7 mm auf den Kern 7 entfallen. Um eine Einkopplung des zu übertragenen Lichtes in den Mantel 8 zu vermeiden, ist dieser bis 5 mm weit hinter der Einkoppelfläche 6 weggeätzt.

In Figur 2 ist schematisch ein Vielzahl von Einzelelementen 1 in einer für das erfindungsgemäße optische Bauteil 9 vorteilhaften Anordnung dargestellt. Die Einkoppelflächen 6 der Einzelelemente 1 liegen dabei in zwei parallel und mit Abstand zueinander verlaufenden Einkoppelebenen. Die in der, in Einstrahlrichtung 5 gesehen, ersten Einkoppelebene verlaufenden Einkoppelflächen 6 sind dabei mit einfacher Schraffur, die in der zweiten Einkoppelebene liegenden Einkoppelflächen 6 mit kreuzweiser Schraffur dargestellt. Die Einzelelemente 1 sind dabei in einer regelmäßig aufgebauten Packung so zueinander angeordnet, daß jeder Einkoppelfläche 6 die nicht am Rande des Bauteils 9 liegt, jeweils vier Einkoppelflächen 6 gleichwertig benachbart zugeordnet sind, wobei sich benachbarte Einkoppelflächen 6 tangierend berühren. Zwischen den Einkoppelflächen 6 benachbarter, in der ersten Einkoppelebene endender Einkoppelelemete 1 sind Freiflächen 10 vorhanden. Der Anteil des einzukoppelnden Lichtes, der auf die Freiflächen 10 der ersten Einkoppelebene trifft und der symbolisch mit den Pfeilen 11 bezeichnet ist, trifft in der zweiten Einkoppelebene auf die Einkoppelflächen 6 der Einzelelemente 1, die in Einstrahlrichtung 5 gesehen hinter den Freiflächen 10 der ersten Einkoppelebene angeordnet sind. Dabei ist jeder Freifläche 10 eine größere Einkoppelfläche 6 in der zweiten Einkoppelebene zugeordnet.

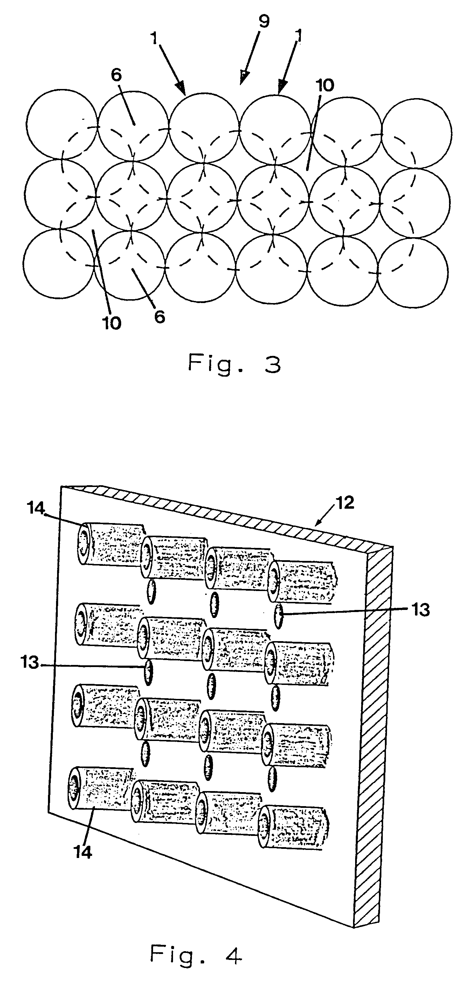

In der in Figur 3 gezeigten Draufsicht auf die Stirnfläche eines erfindungsgemäßen optischen Bauteils 9 mit einer räumlichen Anordnung der Einzelelemente 1 wie in Figur 2 dargestellt, sind die in der ersten Einkoppelebene verlaufenden Einkoppelflächen 6 mit geschlossenen Kreisen, die in der zweiten Einkoppelebene verlaufenden Einkoppelflächen 6 mit gestrichtelten Kreisen bezeichnet. Diese Darstellungsweise verdeutlicht, daß die Freiflächen 10 kleiner sind als die ihnen zugeordneten, in der zweiten Einkoppelebene verlaufenden Einkoppelflächen 6.

Die in Figur 4 dargestellte, quadratische Lochplatte 12 aus Quarzglas ist für die Halterung von insgesamt 25 Einzelelementen 1, wie sie im Ausführungsbeispiel anhand der Figur 1 beschrieben worden sind ausgebildet, wobei mit Bezugsziffern bezeichnete Teile, die in Figur 4 nicht erläutert sind, den in Figur 1 mit den gleichen Bezugsziffern bezeichneten Teilen entsprechen. Die Lochplatte 12 weist durchgehenede Bohrungen 13 auf, wobei einem Teil der Bohrungen 13 koaxial, mit der Lochplatte 12 verschmolzene, Quarzglasröhrchen 14 vorgesetzt sind. Die Mittenabstände der mit Quarzglasröhrchen 14 versehenen Bohrungen 13 zueinander sowie der übrigen Bohrungen 13 zueinander beträgt jeweils 6 mm. Dabei haben die mit Quarzglasröhrechen 14 versehenen Bohrungen 13 zu den übrigen Bohrungen 13 einen Mittenabstand in Millimetern, der der Quadratwurzel von 18 entspricht. Die Kantenlänge der Lochplatte 12 beträgt 30 Millimeter, ihre Dicke 10 Millimeter. Der Durchmesser der Bohrungen 13 bzw. der Quarzglasröhrchen 14 ist mit 0,85 mm geringfügig größer als die Durchmesser der zylindrischen Bereiche 4 in den Bohrungen 13 zu haltenden Einzelelemente 1. Dabei werden die Einzelelemente 1 in den Bohrungen 13 der Lochplatte 12 so gehalten, daß ihre Einkoppelflächen 11 auf der mit den Quarzglasröhrchen 14 versehenen Seite der Lochplatte 12 angeordnet sind. Den mit den Quarzglasröhrchen 14 versehenen Bohrungen 13 sind die Einzelelemente 1 zugeordnet, deren Einkoppelflächen 6 in der ersten Einkoppelebene verlaufen. Die Länge der Quarzglasröhrchen 14, die den Abstand zwischen der ersten und der zweiten Einkoppelebene bestimmt, beträgt 35 mm. Jedes Einzelelement 1 ist so in eine Bohrung 13 eingeklebt, daß der Verjüngungsbereich 3 mit der Außenseite auf dem Rand der Bohrung 13 bzw. auf dem Rand des Quarzglasröhrchens 14 aufliegt. Bei einer Einkopplung eines einen quadratischen Querschnitt mit einer Kantenlänge von 18 mm aufweisenden Xenon-Chlorid-Laserstrahls (Wellenlänge: 308 Nano-Meter) wird mit dieser Anordnung von Einzelelementen 1 ein Einkoppelwirkungsgrad von mehr als 95% erreicht, ausschließlich Fresnelreflexion.

## Patentansprüche

1. Flexibles, optisches, eine Vielzahl länglicher, lichtleitender Einzelelemente enthaltendes Bauteil für die Übertragung von Licht, wobei jedes Einzelelement einen Kern und einen diesen umhüllenden, eine kleinere Brechzahl als der Kern aufweisenden Mantel umfaßt und in Einstrahlrichtung des zu übertragenen Lichtes gesehen vor einem zylindrischen Bereich einen Verjüngungsbereich aufweist, dessen Querschnittsfläche sich in Einstrahlrichtung stetig verkleinert und der auf seiner, einer das zu übertragende Licht emittierenden Lichtquelle zugekehrten Stirnseite eine Einkoppelfläche aufweist, wobei eine erste Einkoppelebene von den Einkoppelflächen von Einzelelementen gebildet wird, wobei zwischen benachbarten Einkoppelflächen Freiflächen vorhanden sind, und wobei in Einstrahlrichtung (5) gesehen mindestens eine weitere, parallel zur ersten Einkoppelebene verlaufende und dieser mit Abstand nachgeordnete Einkoppelebene vorgesehen ist, in der die Einkoppelflächen (6) von weiteren Einzelelementen (1) so angeordnet sind, daß sie jeweils hinter den Freiflächen (10) liegen.

2. Optisches Bauteil nach Anspruch 1 , dadurch gekennzeichnet, daß die Projektion der Einkoppelflächen (6) entgegen der Einstrahlrichtung (5), die in der mindestens einen weiteren Einkoppelebene liegen, auf die erste Einkoppelebene, die Freiflächen (10) vollkommen bedeckt.

3. Optisches Bauteil nach Anspruch 2, dadurch gekennzeichnet, daß die Projektion der Einkoppelflächen (6), die in der zweiten Einkoppelebene liegen, entgegen der Einstrahlrichtung (5) auf die erste Einkoppelebene, die Freiflächen (10) vollkommen bedeckt.

4. Optisches Bauteil nach einem oder mehreren der Anspruche 1 bis 3, dadurch gekennzeichnet, daß von den Einzelelementen (1), deren Einkoppelflächen (6) in der ersten Einkoppelebene liegen, das Mantel-Material (8) im Bereich der Einkoppelflächen (6) entfernt ist.

5. Optisches Bauteil nach Anspruch 4, dadurch gekennzeichnet, daß von den Einzelelementen (1) das Mantel-Material (8) im Bereich der Einkoppelflächen (6) entfernt ist.

6. Optisches Bauteil nach Anspruch 4 oder 5, dadurch gekennzeichnet, daß das Mantel-Material (8) in Einstrahlrichtung (5) gesehen von den Einkoppelflächen (6) an in einem Bereich von 1 mm bis 10 mm entfernt ist.

7. Optisches Bauteil nach einem oder mehreren der Ansprüche 1 bis 6, dadurch gekennzeichnet, daß die Einzelelemente (1) in einer mit durchgehenden Öffnungen (13) versehenen Lochplatte (12) gehalten sind.

8. Optisches Bauteil nach Anspruch 7, dadurch gekennzeichnet, daß ein Teil der Öffnungen (13) jeweils koaxial mit einem hohlzylindrischen Vorsatz (14) versehen ist und diesen Öffnungen (13) jeweils ein Einzelelement (1) zugeordnet ist, dessen Einkoppelfläche (6) in der ersten Einkoppelebene verläuft.

9. Optisches Bauteil nach Anspruch 7 und/oder 8, dadurch gekennzeichnet, daß die Lochplatte (12) aus Quarzglas besteht, an der Quarzglasröhrchen (14) angebracht sind.

10. Optisches Bauteil nach Aspruch 7 und/oder 8, dadurch gekennzeichnet, daß die Lochplatte (12) aus Metall besteht, an der Metallröhrchen (14) angebracht sind.

## Claims

1. A flexible, optical component containing a plurality of elongated, photoconducting individual elements, for the transmission of light, in which each individual element comprises a core and a casing surrounding the latter, having a smaller refractive index than the core and, viewed in the beam direction of the light to be transmitted, has a tapered region in front of a cylindrical region, the cross-sectional area of which tapered region is continuously reduced in the beam direction and which, on its end face facing a light source emitting the light to be transmitted, has a coupling face, in which a first coupling plane is formed by the coupling faces of individual elements, in which between adjacent coupling faces free faces are present, and in which, viewed in the beam direction (5), at least one further coupling plane is provided, running parallel to the first coupling plane and arranged thereafter at a distance, in which the coupling faces (6) of further individual elements (1) are arranged such that they lie in each case behind the free faces (10).

2. An optical component according to Claim 1, characterised in that the projection of the coupling faces (6) against the beam direction (5), which lie in the at least one further coupling plane, onto the first coupling plane, completely covers the free faces (10).

3. An optical component according to Claim 2, characterised in that the projection of the coupling faces (6), which lie in the second coupling plane, against the beam direction (5), onto the first coupling plane, completely covers the free faces (10).

4. An optical component according to one or more of Claims 1 to 3, characterised in that the casing material (8) is arranged at a distance, in the region of the coupling faces (6), from the individual elements(1), the coupling faces (6) of which lie in the first coupling plane.

5. An optical component according to Claim 4, characterised in that the casing material (8) is arranged at a distance from the individual elements (1) in the region of the individual coupling faces (6).

6. An optical component according to Claim 4 or 5, characterised in that the casing material (8), viewed in the beam direction (5), is arranged at a distance from the coupling faces (6) at a range of 1mm to 10 mm.

7. An optical component according to one or more of Claims 1 to 6, characterised in that the individual elements (1) are held in a perforated plate (12) provided with continuous openings (13).

8. An optical component according to Claim 7, characterised in that a portion of the openings (13) is in each case provided coaxially with a hollow cylindrical extension (14) and in each case an individual element (1) is associated with these openings (13), the coupling face (6) of which runs in the first coupling plane.

9. An optical component according to Claim 7 and/or 8, characterised in that the perforated plate (12) consists of quartz glass, on which small quartz glass tubes (14) are disposed.

10. An optical component according to Claim 7 and/or 8, characterised in that the perforated plate (12) consists of metal, on which small metal tubes (14) are disposed.

## Revendications

1. Composant optique flexible, comportant une multitude d'éléments individuels allongés conducteurs de lumière, pour la transmission de lumière, chaque élément individuel comportant un noyau et un manteau qui entoure celui-ci et qui a un indice de réfraction inférieur à celui du noyau, qui présente avant une région cylindrique, vu en direction de la radiation incidente de la lumière à transmettre, une région d'étranglement dont la surface de section transversale diminue constamment en direction de propagation de la lumière, et qui présente, sur sa face frontale orientée vers une source de lumière émettant la lumière à transmettre, une surface de couplage, un premier plan de couplage étant formé par les surfaces de couplage des éléments individuels, des espaces libres étant présents entre les surfaces de couplage voisines, et, vu en direction de propagation de la lumière (5), il est prévu au moins un autre plan de couplage qui s'étend parallèlement par rapport au premier plan de couplage et est intercalé à distance derrière celui-ci, autre plan dans lequel les surfaces de couplage (6) d'autres éléments de couplage (1) sont agencées de telle sorte qu'elles se trouvent respectivement derrière les espaces libres (10).

2. Composant optique selon la revendication 1, caractérisé en ce que la projection, en sens opposé à la direction de propagation et sur le premier plan de couplage, des surfaces de couplage (6) qui sont situées dans un moins un autre plan de couplage, recouvre entièrement les espaces libres (10).

3. Composant optique selon la revendication 2, caractérisé en de que la projection, en sens opposé à la direction de propagation et sur le premier plan de couplage, des surfaces de couplage (6) qui sont situées dans le second plan de couplage recouvre entièrement les espaces libres (10).

4. Composant optique selon une ou plusieurs des revendications 1 à 3, caractérisé en ce que le matériau de manteau (8) est enlevé dans la région des surfaces de couplage (6) des éléments individuels (1), dont les surfaces de couplage (6) sont situées dans le premier plan de couplage.

5. Composant selon la revendication 4, caractérisé en ce que le matériau de manteau (8) est enlevé des éléments individuels (1) dans la région des surfaces de couplage (6).

6. Composant optique selon l'une ou l'autre des revendications 4 et 5, caractérisé en ce que le matériau de manteau (8), vu en direction de propagation de la lumière (5), est enlevé dans une région de 1 mm à 10 mm à partir des surfaces de couplage (6).

7. Composant optique selon une ou plusieurs des revendications 1 à 6, caractérisé en ce que les éléments individuels (1) sont retenus dans une plaque à trous (12) pourvue d'ouvertures traversantes (13).

8. Composant optique selon la revendication 7, caractérisé en ce qu'une partie des ouvertures (13) est pourvue coaxialement d'un embout à cylindre creux (14) et qu'à ces ouvertures (13) est associé respectivement un élément individuel (1) dont la surface de couplage (6) s'étend dans le premier plan de couplage.

9. Composant optique selon la revendication 7 et/ou 8, caractérisé en ce que la plaque à trous (12) est constituée en verre quartzeux, sur laquelle sont fixées des canules en verre quartzeux (14).

10. Composant optique selon la revendication 7 et/ou 8, caractérisé en ce que la plaque à trous (12) est constituée en métal, sur laquelle sont fixées des canules en métal (14).
